# EUROPÄISCHE PATENTSCHRIFT

(11) **EP 1 506 518 B1**
(45) Veröffentlichungstag und Bekanntmachung des Hinweises auf die Patenterteilung: **31.10.2007**
(21) Anmeldenummer: 03735306.7
(22) Anmeldetag: 15.05.2003
(51) Int. Cl.: G06K 9/00

(54) **FINGERERKENNUNGSMODUL IM DÜNNFILMAUFBAU, MIT RESISTIVEN TEMPERATUREMPFINDLICHEN ELEMENTEN**
FINGERPRINT RECOGNITION MODULE HAVING A THIN-FILM STRUCTURE AND COMPRISING RESISTIVE, TEMPERATURE-SENSITIVE ELEMENTS
MODULE DE RECONNAISSANCE D'EMPREINTES DIGITALES A STRUCTURE EN MINCE FILM ET DOTE D'ELEMENTS RESISTIFS SENSIBLES A LA TEMPERATURE

(30) Priorität: 17.05.2002 DE 10222616
(43) Veröffentlichungstag der Anmeldung: 16.02.2005
(73) Patentinhaber: Albert-Ludwigs-Universität Freiburg, 79104 Freiburg (DE)
(72) Erfinder: BÜSTGENS, Burkhard, 79108 Freiburg (DE); URBAN, Gerald, 79104 Freiburg (DE); AURICH, Joachim, 56068 Koblenz (DE); IGEL, Günter, 79331 Teningen (DE)
(74) Vertreter: Huwer, Andreas
(86) Internationale Anmeldenummer: PCT/DE2003/001583
(87) Internationale Veröffentlichungsnummer: WO 2003/098535

(56) Entgegenhaltungen:
- WO-A-99/45496
- US-A- 6 061 464
- US-A- 6 091 837

## Beschreibung

Die vorliegende Erfindung betrifft die Identifikation von Personen mittels Fingerabdruck.

Es sind verschiedene Fingerprintsensoren bekannt, die mit externen Rechnern zu Fingerprint - Verifikationssystemen zusammengeschlossen sind. Die Fingerprintsensoren selbst sind in der Regel großflächige Silizium-Chips (US 9,978,496; US 6,069,970; US 6,091,837), die die große Chipfläche nur unzureichend ausfüllen. Es sind auf die gesamte Chipfläche, zwischen den einzelnen Pixeln verteilte, ungenutzte Flächenstücke vorhanden. Da die Chipkosten im wesentlichen nur durch die Chipfläche bestimmt werden, sind diese im Falle der genannten Fingerprintsensoren unnötig hoch. Die Nutzung der ungenutzten Flächenstücke, z.B. für einen Mikroprozessor, der eine Fingerabdruck - Verifikation durchführt, scheitert an der notwendigen flächigen Zerstückelung der hierzu freien Flächenbereiche. Auch haben die beschriebenen Sensoren zum Nachteil, daß sie an das Konstruktionsmaterial Silizium gebunden sind und deshalb nur mit Problemen in viele Anwendungen, z.B. flexible Smartcards, zu applizieren sind. In allen Fällen ist der empfindliche Silizium-Chip direkt Umgebungsbelastungen ausgesetzt. Zerbrechlichkeit des Chips und Empfindlichkeit der Oberflächen gegenüber Schlag bescheren trotz aller Beschichtungen nur unzureichende Lebensdauern.

Die Erfindung hat zur Aufgabe, zu einem niedrigen Preis ein Fingererkennungsmodul mit großem Fingerprint - Meßfeld darzustellen, welches sich in unterschiedliche Geräte und Umgebungen einfach integrieren läßt, und ohne daß die Oberfläche eines Mikrochips direkt dem Kontakt eines Fingers oder anderer Umwelteinflüsse ausgesetzt wird. Zudem soll der erfindungsgemäße Aufbau die Integration eines großflächigen Fingerprint-Meßfeldes in eine flexible Smartcard ermöglichen. Hierfür muß der Sensor selbst ausreichend elastisch sein, bei gleichzeitig mechanisch hoch belastbarer Oberfläche.

Die Aufgabe wird dadurch gelöst, dass das Fingererkennungsmodul aus
- einem Substrat,
- einem Verbund aus strukturierten Dünnfilmen auf der Oberfläche des Substrates,
   welcher auf einem Teil des Substrates ein Meßfeld zum Messen eines Fingerabdruckes bildet, bestehend aus in Zeilen und Spalten angeordneten resistiven, temperaturempfindlichen Elementen und
   welcher Dünnfilmstrukturen zur Beheizung der resistiven, temperaturempfindlichen Elemente enthält und
   welcher Leiterbahnen enthält, die die resisitiven, temperturabhängigen Elemente mit mind. einem auf dem Substrat außerhalb des Meßfeldes befindlichen Anschlußfeld verbinden,
- mind. einem mikroelektronischen Auswerteschaltkreis, der mit dem mind. einen Anschlußfeld elektrisch verbunden ist und der Schaltkreise enthält, mit denen die Dünnfilmstrukturen zur Beheizung der resistiven, temperaturempfindlichen Elemente angesteuert, die resistiven, temperaturempfindlichen Elemente ausgelesen und Daten weitergeleitet werden,
besteht.

Die Erfindung hat sich zum Ziel gesetzt, robuste und billig herstellbare, ausschließlich passive temperaturempfindliche Elemente für die Realisierung eines thermischen Fingerprintsensors auf beliebigen, nicht notwendigerweise halbleitenden Substraten zu realisieren. Hierbei werden im Rahmen der Erfindung neben einem geeigneten Schichtaufbau insbesondere auch die Probleme der Ansteuerung/ des Auslesens des passiven thermischen Sensorfeldes aus beispielsweise 200 x 300 resisitiven Elementen bei einer Auflösung von beispielsweise 500 dpi durch eine periphere Ansteuerelektronik, unter Berücksichtigung der komplexen Anforderungen des thermischen Meßverfahrens gelöst. Ein geeignetes Meßprinzip ist in US 6,091,837 beschrieben. Jedoch ist die in US 6,091,837, Fig. 5 vorgestellte Anordnung der elektrischen Beschaltung grundsätzlich nicht auf ein rein passives Sensorarray übertragbar. Die annähernd lineare Kennlinie der passiven Elemente führt zur starken gegenseitigen Beeinflussung der Einzelelemente im Array und damit elektrischen Beeinträchtigung des elektrischen Meßeffektes. Das erfindungsgemäße Ausleseprinzip löst dieses Teilproblem. Weiterhin verlangt das Meßprinzip in US 6,091,837 die Einbringung einer Heizleistung in die einzelnen Pixel, in der Regel durch Verwendung von Heizelementen. Die Heizleistung muß möglichst gleichmäßig und verlustarm durch Leiterbahnen zugeführt werden. Die in US 6,091,837, Fig. 5 dargestellte Art der Beheizung der Elemente durch parallel geschaltete Heizelemente scheitert in einem Dünnschichtverbund, da die kumulierte Heizleistung aller Heizelemente durch gemeinsame Dünnschicht-Leiterbahnen zugeführt werden muß, aus folgendem Grund: Da die die Pixel verbindenden, leistungsübertragenden Leiterbahnen bei geringer Resistivität (hohe Schichtdicke) stets auch eine hohe Wärmeleitfähigkeit besitzen, würde der thermische Kontrast zwischen den Pixeln und damit der Meßkontrast zu stark beeinträchtigt werden. Eine Verminderung der Schichtdicke dieser Leiterbahnen derart, daß einerseits der thermische Kontrast zwischen den Pixeln ausreichend ist und andererseits die Heizleistung ausreichend verlustarm zugeführt wird, führt zu keiner praktikablen Lösung für ein hochauflösendes Array. Die Folge ist, daß je nach Zuleitungslänge, d.h. je nach Lage des betrachteten Heizelementes im Array die abgegebene Heizleistung stark variiert.

Die Erfindung löst dieses Problem und löst selbst bei optional spalten-individueller Beheizung das Problem, die Anzahl der Leitungsanschlüsse aus dem Meßfeld heraus auf im wesentlichen der Anzahl der Zeilen plus der Anzahl der Spalten zu beschränken, indem die Beheizung jeder Spalte durch einen zusätzlichen Heizleiter vorgenommen wird, der sich innerhalb des Dünnschicht-Verbundes oberhalb oder unterhalb der resisitiven, temperaturabhängigen Elemente befindet wobei dessen oberes Ende elektrisch mit der Leiterbahn verbunden ist, die den jeweiligen Spaltenanschluss der resisitiven, temperaturabhängigen Elemente bildet und dessen unteres Ende mit den unteren Enden weiterer Heizleiter, die weitere Spalten beheizen, verbunden ist.

Die Erfindung erlaubt die Integration eines großen Fingerprint-Messfeldes mit integrierter passiver Sensorik direkt auf sehr unterschiedlichen, nicht-halbleitenden Substratmaterialien, die je nach den mechanischen Anforderungen des Einsatzgebietes ausgewählt werden können, beispielsweise Kunststofwolien, Metallfolien oder Laminate für den Einsatz in biegsamen Smartcards. Dabei werden erfindungsgemäß die aufgetragenen Dünnschichten wesentlich härter gewählt wie der darunterliegende Teil des Substrates, so dass, ähnlich wie bei der menschlichen Haut, bei Punktbelastung die Verformung an die darunterliegende, elastischere Substrat schicht weitergeleitet wird. So wird eine Verminderung von lokalen Kraftspitzen erreicht. Gleichzeitig verhindert die hohe mechanische Festigkeit des Dünnschicht-Verbundes plastische Verformungen (Zerstörung) derselben.

Neben den mechanischen Vorteilen ergeben sich Kostenvorteile aus der Erfindung: In den peripher zum Messfeld angebrachten Mikrochips kann die komplette Feldansteuerung und zusätzliche Rechenintelligenz für den Verifikationsvorgang integriert sein. Die Größe des Mikrochips kann nach gegenwärtigem Stand der Technik klein gegenüber dem Substrat bzw. dem Sensorfeld selbst gehalten werden, was in einem niedrigen Chippreis resultiert. Der Dünnschicht-Verbund selbst kann unter Verwendung einer großflächigen, kostengünstigen Technologie unter weit geringeren flächenbezogenen Kosten als ein Mikrochip hergestellt werden.

Bei einer vorteilhaften Ausführungsform der Erfindung besteht der an den Verbund aus Dünnschichten angrenzende Teil des Substrates aus Kunststoff.

Bei einer bevorzugten Ausgestaltung der Erfindung besteht das Substrat aus einem Metall-Kunststofflaminat und die Kunststoffseite des Laminats dient als Substratoberfläche.

Vorteilhaft ist, wenn der Verbund aus Dünnschichten zusätzlich ganz oder teilweise mit einer dünnen Oberflächenschicht aus elektrisch leitfähigem Material überzogen ist. Die Oberflächenschicht aus elektrisch leitfähigem Material kann geerdet werden.

Zweckmäßigerweise wird über die Oberflächenschicht aus elektrisch leitfähigem Material der die Heizleiter umfassende Stromkreis geschlossen.

Bei einer vorteilhaften Ausführungsform der Erfindung sind die Heizleiter als Oberflächenschicht aus elektrisch leitfähigem Material ausgeführt. Die Oberflächenschicht kann aus transparentem elektrisch leitfähigen Material bestehen.

Vorzugsweise ist der Dünnfilmverbund zusätzlich ganz oder teilweise mit einer schlecht benetzenden Oberflächenschicht oder mit einer Schicht mit Lotus-Effekt überzogen. Der Dünnfilmverbund kann zusätzlich ganz oder teilweise mit einer oberflächenreibungsvermindernden Schicht überzogen sein.
- Fig. 1: zeigt eine Gesamtansicht des Fingererkennungsmoduls,
- Fig. 2: zeigt ein Gesamtschnittbild des Fingererkennungsmoduls,
- Fig. 3: zeigt ein Schnittbild durch das Messfeld in einem Beispiel - Aufbau mit Heizleitern direkt unterhalb der resisitiven, temperaturempfindlichen Elemente,
- Fig. 4: zeigt ein Schaltbild zur Erläuterung der elektrischen Zusammenhänge und
- Fig. 5: zeigt eine günstige Layoutvariante zur Beheizung mit Hilfe einer elektrisch leitfähigen Abschlussschicht.

### MIT FOLGENDER NUMMERIERUNG:

- 1: Fingererkennungsmodul
- 2: Verbund aus strukturierten Dünnfilmen
- 3: Messfeld
- 4: resistive, temperaturabhängige Elemente
- 5a,b: erste Metallschicht, zweite Metallschicht
- 6: Anschlußfeld
- 7: mikroelektronischer Auswerteschaltkreis
- 8: Kontaktierung
- 9: elektrisch und thermisch isolierende Schicht
- 10: Substratplatte, -folie
- 11: Heizleiter
- 12: Schalter
- 13: virtuelle Masse
- 14: OPV (Operationsverstärker)
- 15: Betriebsspannung
- 16: Kontakt
- 17: Isolierschicht
- 18: Kontaktfenster
- 19: Abschlußschicht/Schirmung/Sensormasse
- 20: Zeilenleiterbahn
- 21: Spaltenleiterbahn
- 22: Auftrennung Heizleiter und Spaltenleiterbahn
- 23: Schalter für Heizen

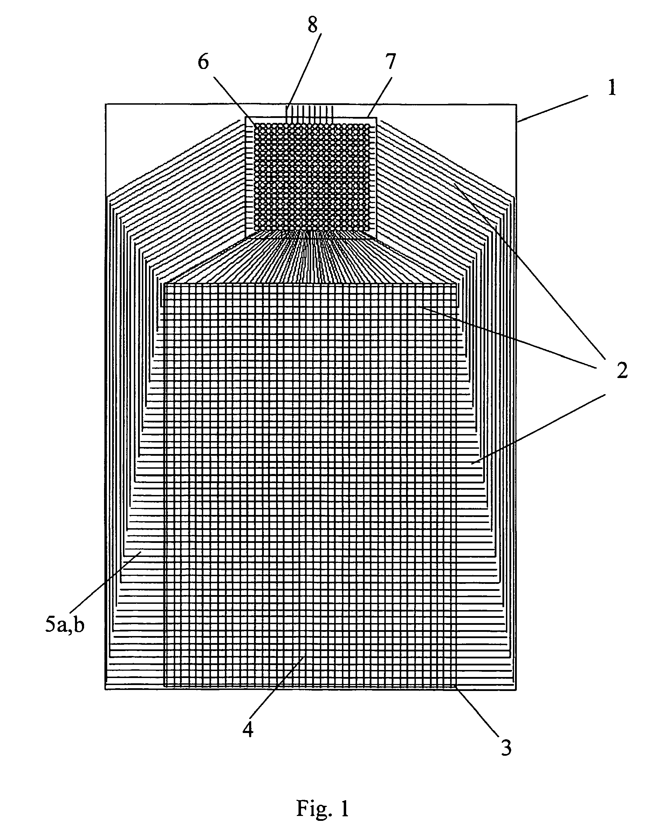

Fig. 1 zeigt ein Fingererkennungsmodul in einer Gesamtansicht von oben. Das Substrat 1 bildet die Basis für den Aufbau des Moduls und bedarf keiner besonderen halbleitenden Eigenschaften. Für das verwendete thermische Funtionsprinzip des Fingerprintsensors ist entscheident, daß es sich zumindest bei dem unter dem Meßfeld 3 befindlichen Teil des Substrates um eine Schicht mit thermischer Isolierwirkung handelt. Diese kann durch eine geeignete Materialwahl, z.B. Glas, Polymere, o.ä. und eine relevante Dicke, etwa 1000 nm bis mehrere 100.000 nm , erzielt werden. Praktischerweise besteht das gesamte Substrat aus einem thermisch gut isolierenden Material, wie z.B. Glas oder Polymer. Vorteilhaft ist auch ein Laminat aus einer Platte oder Folie 10 aus Metall, Keramik o.ä. mit einem Polymer 9 , beispielsweise einem Polyimid oder einem Epoxid als Substratoberfläche, wobei die z.B. Metallplatte oder - folie dem Modul hohe Zugfestigkeit verleiht und auch Verzüge während des Fertigungsvorganges gering hält. Geeignet sind u.a. die als Flexprint bezeichneten flexiblen Leiterplatten, die hier jedoch auf ihrer Rückseite bearbeitet werden. Dabei kann es sinnvoll sein, zur Rauhigkeitsverminderung eine die Unebenheiten mindestens abdeckende, dünne und nichtleitende Planarisierungsschicht aufzutragen, bevor der Verbund aus Dünnschichten 2 aufgetragen wird. Am Ende des Fertigungsprozesses kann ggf. die Metallplatte, -folie ganz oder teilweise weggeätzt werden.

Auf der elektrisch/thermisch isolierenden Seite des Substrats wird nach evtl. erfolgter Planarisierung ein Verbund aus Dünnfilmen 2 additiv aufgetragen, welcher in seiner Gesamtheit etwa zwischen 300 nm und 5000 nm dick ist und für die Fingerbilderfassung funktionale Eigenschaften hat: Leiterbahnen aus Metallschichten 5, beispielsweise Ti/Au oder Ti/Al dienen der Signalübertragung und Leistungsübertragung zwischen den Sensorelementen und dem Kontaktfeld 6 zum Auswerteschaltkreis 7. Das Kontaktfeld 6 ist wegen der vielen Anschlußpads am besten in Arrayform ausgeführt. Weitere Leiterbahnen 8 verbinden den Auswerteschaltkreis 7 über das Kontaktfeld 6 zu anderen Bausteinen (nicht dargestellt) oder zu einem Leistungs- /Dateninterface. Die Leiterbahnen können dabei durch bekannte Verfahren der Dünnfilm-Strukturierung hergestellt werden, möglicherweise ergänzt durch galvanische oder anderere Schichtaufbauverfahren.

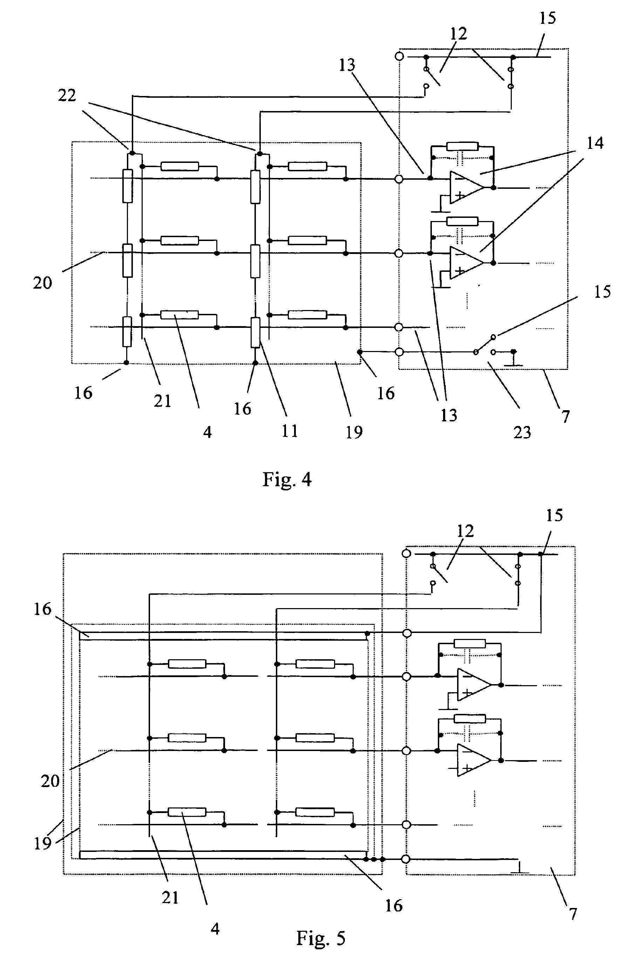

Der Aufbau des Fingerabdruck-Meßfeldes ist der eines Arrays aus resistiven, temperaturabhängigen Elementen 4, welche in Zeilen und Spalten angeordnet sind. Diese werden durch Zeilenleiterbahnen 20 und Spaltenleiterbahnen 21 adressiert, die eine Fortführung der Leiterbahnen 5 in das Meßfeld darstellen, indem jedes resistive temperaturempfindliche Element 4 je mit einer Zeilenleiterbahn und einer Spaltenleiterbahn verbunden ist, siehe auch Fig. 4. Im Zusammenhang mit einer Separierung von Meßfeld und Ausleseelektronik ist es besonders vorteilhaft, resistive temperaturempfindliche Elemente 4 mit hohem Widerstand zu verwenden, so daß die Zuleitungsanschlüsse selbst bei geringen Schichtdicken klein gegenüber dem Widerstand der resistiven temperaturempfindlichen Elemente ist. Auch im Sinne eines geringen Leistungsverbrauches für den Meßvorgang ist es vorteilhaft, daß die einzelnen resistiven temperaturempfindlichen Elemente Widerstandswerte im Bereich von 100 kOhm bis mehrere Mega-Ohm besitzen. Geeignet sind z.B. resistive temperaturempfindliche Elemente aus a-Ge, SiC, VOx oder YBaCuO mit hohem Temperaturkoeffizienten.

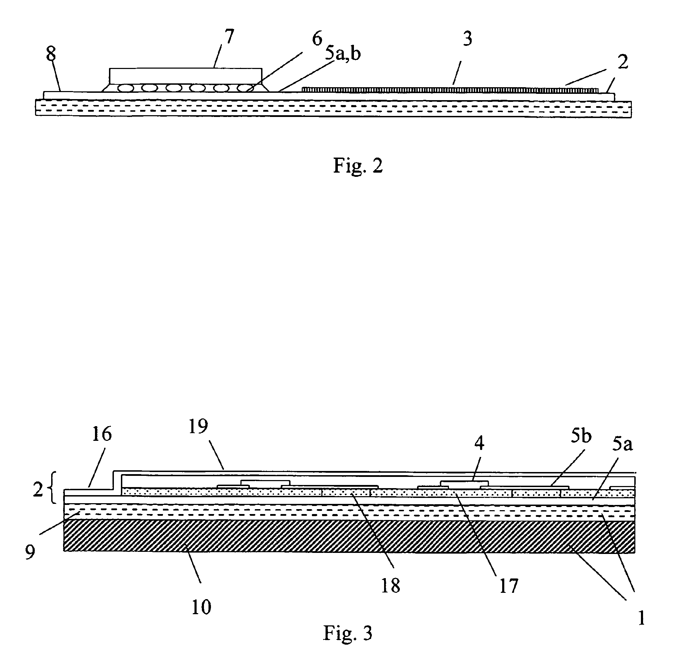

Fig. 2 zeigt einen Querschnitt durch den Fingererkennungsmodul. Erkennbar wird hier die Kontaktierung des mikroelektronischen Auswerteschaltkreises 7 mit dem Kontaktfeld 6. Verschiedene Flipchip-Technologien stehen für diese Aufgabe zur Verfügung, z.B. Solderbumps, Polymer-FC oder ACF (anisotropic conducting films), die dem Stand der Technik angehören. Das Substrat ist in Fig. 2 beispielhaft aus Glas ausgeführt.

Fig. 3 zeigt einen Querschnitt durch das Meßfeld des Fingererkennungsmoduls. Auf dem Substrat 1, das hier beispielsweise als Laminat aus einer Metallfolie 10 und einer Kaptonfolie 9 ausgeführt ist, welche durch eine dünne zusätzliche Polyimidschicht planarisiert wurde (nicht dargestellt), wird zuerst eine Metallschicht 5a aufgetragen, welche beispielsweise die Spaltenleiterbahnen 21 und/oder Heizleiter 11 enthält. Spaltenleiterbahnen 21 und Heizleiter 11 können auch in unterschiedlichen leitenden Schichten realisiert werden, die durch Isolierschichten 17 getrennt sind. Dies ist sinnvoll, wenn beispeilsweise transparente ITO-Schichten für die Zeilenleiterbahnen 20 und Spaltenleiterbahnen 21 verwendet werden sollen, die Heizleiter nicht ausreichend niederohmig sind. Isolierschichten sind beispielsweise aus Si02, SiNx, Polyimid oder Epoxid und enthalten Kontaktfenster 18. Durch die Kontaktfenster 18 hindurch werden die eigentlichen resistiven, temperaturempfindlichen Elemente 4 direkt oder über ein kleines Leiterbahnstück der zweiten Metallschicht 5b indirekt mit einer Spaltenleiterbahn der ersten Kontaktschicht 5a verbunden. Die zweite Metallschicht enthält Zeilenanschlüsse 20, welche die resistiven, temperaturempfindlichen Elemente 4 letztlich mit dem Kontaktfeld 6 elektrisch verbinden.

Abgeschlossen wird der Verbund aus Dünnschichten 2 durch ein oder mehrere Passivierungsschichten. Eine Passivierungsschicht besteht je nach den Passivierungsanforderungen der temperatursensitiven Materialien aus Si02, SiNx, Epoxid oder Polyimid.

Besonders vorteilhaft in mehrerer Hinsicht ist der folgende Auftrag einer dünnen Metallschicht 19: Wird diese in geeigneter Weise auf das Bezugspotential des Sensors gelegt, so kann sie die resistiven, temperaturempfindlichen Elemente 4 und die mikroelektronische Schaltung vor elektromagnetischen Störungen und Endladungen schützen. Weiterhin bietet sie Schutz vor mechanischen Beanspruchungen. Weiterhin kann sie auch als elektrischer Leiter zur Signal-/Leistungsübertragung (s. unten) und/oder selbst zur Beheizung herangezogen werden.

Eine weitere Verbesserung der mechanischen Widerstandsfähigkeit läßt sich durch Auftrag einer typischen harten Oberflächenschicht, z.B. SiC, WoC oder ähnliche Materialien erreichen.

Eine weitere optionale Schicht kann eine speziell reibungsvermindernde Schicht sein, welche die Ausprägung besonders schädlicher Scherspannungen an der Oberfläche vermeidet.

Der Gefahr des bekannten Schattenbildes, eines Abbildes des zuletzt gemessenen Fingerabdruckes durch zurückbleibenden Fett/Schweiß, läßt sich durch eine schlecht-benetzbare Oberflächenbeschichtung, etwa in Form einer Lotus-Effekt-Beschichtung entgegenwirken.

Fig. 4 zeigt ein Schaltbild zur Erläuterung des elektrischen Aufbaus. Das Meßfeld 3 und der elektronische Auswerteschaltkreis 7 sind dabei jeweils punktiert umrissen. In der gewählten Variante ist jedes resistive, temperaturabhängige Element 4 mit einer Zeilenleiterbahn 20 und einer Spaltenleiterbahn 21 zur Adressierung verbunden. Die gewählten Elemente sind hochohmig mit ungefähr 1 MOhm und erlauben daher ein stromsparendes, paralleles Auslesen einer ganzen Spalte.

Für den Auslesevorgang ist entscheidend, daß alle Zeilenanschlüsse 13 auf identischem elektrischen Potential liegen. Ist dies nicht der Fall, so wird das Auslesen der Einzelelemente durch mannigfaltige Strompfade über Nachbarelemente gestört und die Empfindlichkeit der Einzelelemente verschlechtert. Erfindungsgemäß wird an den Punkten 13 eine Strommessung bei gleichem Potential vorgenommen, während durch die Schalter 12 eine Meßspannung 15 spaltenselektiv angelegt wird. In Fig. 4 ist beispielhaft schematisch die Einstellung gleicher Spaltenspannungen durch invertierende Operationsverstärker (OPV) 14 realisiert, die an den Punkten 13 jeweils einen virtuellen Nullpunkt ausbilden und eine i.A. komplexe Rückkopplungsimpedanz besitzen. Da mehrere Lösungsvarianten für dieses Problem zur Verfügung stehen, sei hier lediglich darauf hingewiesen, daß die Schaltung imstande sein muß, Potentialdifferenzen zwischen den einzelnen Zeilenanschlüssen zu eliminieren. Es sei hier im Zusammenhang mit der Nomenklatur in dieser Offenlegung darauf hingewiesen, daß die Bezeichnungen Zeilen und Spalten untereinander austauschbar sind.

Die Beheizung erfolgt in der in Fig. 4 dargestellten Variante spaltenweise durch Heizleiter 11, welche sich geometrisch direkt unterhalb oder oberhalb der sensitiven Elemente elektrisch isoliert befinden. Sie sind an ihrem oberen Ende mit den Spaltenleiterbahnen 21 an jeweils einem Punkt 22 verbunden. Von diesem Punkt bis zum Schalter 12 ist somit zum Beheizen und Adressieren der Pixel nur eine einzige Leitung erforderlich, so daß die Zahl der Spaltenanschlüsse insgesamt nur der einfachen Zahl der Spalten entspricht. Am unteren Ende sind die Heizleiter der Spalten elektrisch miteinander verbunden.

Im Allgemeinfall können Heizleiter 11 die Elemente mehrerer Spalten übergreifen, so daß die Elemente mehrerer Spalten gleichzeitig beheizt werden. In diesem Fall sind die Heizleiter 11 an ihrem oberen Ende mit nur einer Spaltenleiterbahn 21 verbunden, auch können diese diskret angeschlossen sein, was jedoch der Einsparung von Anschlüssen entgegen läuft. An ihrem unteren Ende werden wie in Fig. 4 dargestellt, alle Heizleiter oder Gruppen von Heizleitern zu Knotenpunkten zusammengeschlossen. In jedem Fall müssen durch feinere Gruppierungen zusätzliche Anschlüsse in Kauf genommen werden. Durch optionale Verwendung je eines Schalters 23 pro Knotenpunkt kann die Funktion Heizen ein- bzw. ausgeschaltet werden, was die Realisierung unterschiedlicher Betriebsarten, als Beispiel die Betriebsart n Spalten messen - n Spalten heizen - n Spalten messen ermöglicht.

Besonders vorteilhaft ist, wie in Fig. 4 dargestellt, die Verwendung oder Einbeziehung der Oberflächen-Metallschicht 19 zur Rückführung des Heizstromes. Hierfür sind Durchkontaktierungen 16 durch die Passivierungsschicht einerseits am jeweils unteren Ende der Heizleiter 11 oder des diese verbindenden leitenden Bereiches und andererseits in der Nähe des mikroelektronischen Schaltkreises auf eine oder mehrere der Metallschichten, die mit dem Kontaktfeld verbunden sind, vorhanden, siehe auch Fig. 3.

In Fig. 5 ist eine Möglichkeit der Beheizung des Arrays direkt mit Hilfe der Oberflächen-Metallschicht 19 dargestellt. Diese ist im diesem Fall sehr dünn, weit unter 100 nm, evtl. transparent ausgestaltet. Die Heizleiter 1 können in dieser Variante entfallen und tragen somit auch nicht zur Wärmespreizung zwischen den Pixeln bei. Die geringe Dicke der Oberflächen-Metallschicht 19 verursacht nur eine geringe laterale Wärmeausbreitung, ermöglicht damit einen hohen Kontrast. Kontaktiert wird die Oberflächen-Metallschicht 19 wieder mit Hilfe der Durchkontaktierungen 16 auf eine oder mehrere der Leiterbahnen. Für die Variante in Fig. 5 wird die Oberflächen-Metallschicht 19 durch Unterbrechungen so strukturiert, daß sich die Wärmeentwicklung auf das Meßfeld beschränkt. Der Rest des Substrates außerhalb des Anschlußfeldes wird möglichst vollständig mit Bereichen der Oberflächen-Metallschicht 19 abgedeckt und geerdet. Die Variante in Fig. 5 erlaubt weiterhin die Verwendung einer weniger leitfähigen, transparenten ITO (Indium-Tin-Oxide)-Schicht anstelle der metallischen Oberflächenschicht 19 zum Heizen.

Der mikroelektronische Auswerteschaltkreis 7 kann neben der Ansteuerfunktion und Auslesefunktion für das Fingerabdruck-Meßfeld weitere Funktionen enthalten: Im Beispiel des Fingerprint - Verifikationsmoduls ist die Integration eines Prozessors sinnvoll, welcher die Verifikation ganz oder teilweise durchführt. Neben flüchtigen Speichern zur Abarbeitung der Prozeßschritte enthält der Prozessor nichtflüchtige Speicher für Programmcodes oder auch zur Speicherung der/des Fingerabdruck-Templates. In manchen Anwendungen kann es sinnvoll sein, das Fingerabdruck-Template einmalig in einen nichtflüchtigen Speicher abzulegen. Auf diese Weise kann einer nachträglichen Manipulation der Datensätze entgegengewirkt werden.

Neben dem genannten mikroelektronischen Auswerteschaltkreis 7 können weitere Schaltkreise auf das Substrat aufgebracht sein. Dies kann vorteilhaft sein, um die Leitungsführung der Leiterbahnen 5 günstiger zu gestalten, wenn die Chipgröße klein bleiben soll oder wenn es sinnvoll erscheint, unterschiedliche Chiptechnologien für diverse Funktionalitäten zu verwenden.

## Patentansprüche

1. Fingererkennungsmodul, mit
- einem Substrat (10),
- einem Verbund (2) aus strukturierten Dünnfilmen auf der Oberfläche des Substrates (10),
welcher auf einem Teil des Substrates (10) ein Messfeld (3) zum Messen eines Fingerabdruckes bildet, bestehend aus in Zeilen und Spalten angeordneten resisitiven, temperaturempfindlichen Elementen (4) und
welcher Dünnfilmstrukturen (11,19) zur Beheizung der resisitiven, temperaturempfindlichen Elemente enthält und
welcher Leiterbahnen enthält, die die resisitiven, temperturabhängigen Elemente mit mindestens einem auf dem Substrat außerhalb des Messfeldes (3) befindlichen Anschlussfeld (6) verbinden,
- mindestens einem mikroelektronischen Auswerteschaltkreis (7), der mit dem mindestens einen Anschlussfeld (6) elektrisch verbunden ist und der Schaltkreise enthält, mit denen die Dünnfilmstrukturen zur Beheizung der resisitiven, temperaturempfindlichen Elemente (11,19) angesteuert, die resisitiven, temperaturempfindlichen Elemente (4) ausgelesen und Daten weitergeleitet werden.

2. Fingererkennungsmodul nach Anspruch 1, **dadurch gekennzeichnet, dass** die Dünnfilmstrukturen zur Beheizung längliche Heizleiter (11) mit konstanter oder veränderlicher Breite sind, die unter oder über den resisitiven, temperturabhängigen Elementen (4) so gelegen sind, dass sie gleichzeitig bei Stromdurchfluss die resisitiven, temperturabhängigen Elemente (4) mindestens einer Spalte beheizen.

3. Fingererkennungsmodul noch Anspruch 1 und 2, **dadurch gekennzeichnet, dass** die länglichen Heizleiter (11) an ihrem einen Ende je mit dem Spaltenanschluss (22) genau einer Spaltenleiterbahn (21) verbunden sind und an ihrem anderen Ende mit dem anderen Ende weiterer Heizleiter in Form eines Schaltungsknotens verbunden sind.

4. Fingererkennungsmodul nach Anspruch 3, **dadurch gekennzeichnet, dass** der mindestens eine Schaltungsknoten mit je einem elektrischen Schaltelement verbunden ist, das in dem mindestens einen mikroelektronischen Schaltkreis enthalten ist, mit dem sich die Heizfunktion schalten lässt.

5. Fingererkennungsmodul nach Anspruch 1, **dadurch gekennzeichnet, dass** der mindestens eine mikroelektronische Auswerteschaltkreis die elektrischen Potenziale aller Zeilenleiterbahnen (20) aufgleichem Wert hält

6. Fingererkennungsmodul nach Anspruch 1, **dadurch gekennzeichnet, dass** der mindestens eine mikroelektronische Auswerteschaltkreis einen Prozessrechner, bestehend aus Rechen- und Speichereinheiten, enthält, der mittels einer geeigneten Software den gemessenen Fingerabdruck bezüglich ein oder mehrerer gespeicherter Fingerabdrücke verifiziert.

7. Fingererkennungsmodul nach Anspruch 1, **dadurch gekennzeichnet, dass** das Substrat aus Glas besteht.

8. Fingererkennungsmodul nach Anspruch 1, **dadurch gekennzeichnet, dass** der an den Verbund aus Dünnschichten angrenzende Teil des Substrates elastisch im Vergleich zu dem Verbund aus strukturierten Dünnschichten ist.

9. Fingererkennungsmodul nach Anspruch 1, **dadurch gekennzeichnet, dass** der an den Verbund aus Dünnschichten angrenzende Teil des Substrates thermische Isolationswirkung aufweist

10. Fingererkennungsmodul nach Anspruch 1, **dadurch gekennzeichnet, dass** das Substrat aus festem oder biegsamem Kunststoff besteht.

## Claims

1. Fingerprint recognition module, comprising
- a substrate (10),
- a composite (2) composed of structured thin films on the surface of the substrate (10),
which forms on a part of the substrate (10) a measurement zone (3) for measuring a fingerprint, comprising resistive, temperature-sensitive elements (4) arranged in rows and columns, and
which contains thin-film structures (11, 19) for heating the resistive, temperature-sensitive elements, and
which contains conductor tracks that connect the resistive, temperature-sensitive elements to at least one connection zone (6) situated on the substrate outside the measurement zone (3),
- at least one microelectronic evaluation circuit (7) which is electrically connected to the at least one connection zone (6) and which contains circuits by means of which the thin-film structures for heating the resistive, temperature-sensitive elements (11, 19) are driven, the resistive, temperature-sensitive elements (4) are read and data are forwarded.

2. Fingerprint recognition module according to Claim 1, **characterized in that** the thin-film structures for heating are elongate heating conductors (11) having a constant or variable width which are located below or above the resistive, temperature-dependent elements (4) in such a way that they simultaneously heat the resistive, temperature-dependent elements (4) at least one column in the event of current flowing through.

3. Fingerprint recognition module according to Claims 1 and 2, **characterized in that** the elongate heating conductors (11) are connected at one of their ends in each case to the column connection (22) of precisely one column conductor track (21) and are connected at their other end to the other end of further heating conductors in the form of a circuit node.

4. Fingerprint recognition module according to Claim 3, **characterized in that** the at least one circuit node is connected to in each case an electrical switching element which is contained in the at least one microelectronic circuit, by means of which the heating function can be switched.

5. Fingerprint recognition module according to Claim 1, **characterized in that** the at least one microelectronic evaluation circuit holds the electrical potentials of all the row conductor tracks (20) at the same value.

6. Fingerprint recognition module according to Claim 1, **characterized in that** the at least one microelectronic evaluation circuit contains a process computer, comprising arithmetic and memory units, which, by means of a suitable software, verifies the measured fingerprint with respect to one or a plurality of stored fingerprints.

7. Fingerprint recognition module according to Claim 1, **characterized in that** the substrate is composed of glass.

8. Fingerprint recognition module according to Claim 1, **characterized in that that** part of the substrate which adjoins the composite composed of thin films is elastic in comparison with the composite composed of structured thin films.

9. Fingerprint recognition module according to Claim 1, **characterized in that that** part of the substrate which adjoins the composite composed of thin films has a thermal insulation effect.

10. Fingerprint recognition module according to Claim 1, **characterized in that** the substrate is composed of fixed or flexible plastic.

## Revendications

1. Module de reconnaissance d'empreintes digitales, comprenant
- un substrat (10);
- un composite (2) de films minces structurés sur la surface du substrat (10),
qui forme sur une partie du substrat (10) un champ de mesure (3) pour mesurer une empreinte digitale, se composant d'éléments (4) résistifs sensibles à la température, disposés en lignes et en colonnes, et
qui contient des structures en film mince (11, 19) pour le chauffage des éléments résistifs sensibles à la température, et
qui contient des voies conductrices, qui relient les éléments résistifs sensibles à la température à au moins un champ de raccordement (6) se trouvant sur le substrat à l'extérieur du champ de mesure (3);
- au moins un circuit d'exploitation microélectronique (7), qui est relié électriquement à l'au moins un champ de raccordement (6) et qui contient des circuits avec lesquels on commande les structures en film mince (11, 19) pour le chauffage des éléments résistifs sensibles à la température, on lit les éléments résistifs sensibles à la température (4) et on retransmet les données.

2. Module de reconnaissance d'empreintes digitales selon la revendication 1, **caractérisé en ce que** les structures en film mince pour le chauffage sont des conducteurs de chauffage allongés (11) de largeur constante ou variable, qui sont posés en dessous ou au-dessus des éléments résistifs sensibles à la température (4) de telle manière que, lorsqu'un courant circule, ils chauffent simultanément les éléments résistifs sensibles à la température (4) d'au moins une colonne.

3. Module de reconnaissance d'empreintes digitales selon la revendication 1 ou 2, **caractérisé en ce que** les conducteurs de chauffage allongés (11) sont reliés par leur première extrémité chacun au raccord de colonne (22) exactement d'une voie conductrice de colonne (21) et sont reliés par leur autre extrémité à l'autre extrémité d'autres conducteurs de chauffage sous la forme d'un noeud de connexion.

4. Module de reconnaissance d'empreintes digitales selon la revendication 3, **caractérisé en ce que** l'au moins un noeud de connexion est relié chaque fois à un élément de circuit électrique, qui est contenu dans l'au moins un circuit microélectronique, avec lequel on peut connecter la fonction de chauffage.

5. Module de reconnaissance d'empreintes digitales selon la revendication 1, **caractérisé en ce que** l'au moins un circuit d'exploitation microélectronique maintient les potentiels de toutes les voies conductrices de lignes (20) à la même valeur.

6. Module de reconnaissance d'empreintes digitales selon la revendication 1, **caractérisé en ce que** l'au moins un circuit d'exploitation microélectronique comprend un calculateur de traitement, composé d'unités de calcul et de mémoire, qui vérifie au moyen d'un logiciel approprié l'empreinte digitale mesurée par rapport à une ou plusieurs empreintes digitales mémorisées.

7. Module de reconnaissance d'empreintes digitales selon la revendication 1, **caractérisé en ce que** le substrat est constitué de verre.

8. Module de reconnaissance d'empreintes digitales selon la revendication 1, **caractérisé en ce que** la partie du substrat adjacente au composite de couches minces est élastique par comparaison avec le composite de couches minces structurées.

9. Module de reconnaissance d'empreintes digitales selon la revendication 1, **caractérisé en ce que** la partie du substrat adjacente au composite de couches minces présente un effet d'isolation thermique.

10. Module de reconnaissance d'empreintes digitales selon la revendication 1, **caractérisé en ce que** le substrat est composé de matière plastique solide ou flexible.
